# EUROPÄISCHE PATENTSCHRIFT

(11) **EP 4 003 712 B1**
(45) Veröffentlichungstag und Bekanntmachung des Hinweises auf die Patenterteilung: **30.07.2025**
(21) Anmeldenummer: 20734719.6
(22) Anmeldetag: 24.06.2020
(51) Int. Cl.: B29C 70/32, B29D 1/00

(54) **VERFAHREN ZUM HERSTELLEN EINES ROHRTEILS MIT EINEM INNENGEWINDE UND ROHRTEIL MIT EINEM INNENGEWINDE**
METHOD FOR PRODUCING A TUBULAR PART WITH AN INTERNAL THREAD, AND TUBULAR PART WITH AN INTERNAL THREAD
PROCÉDÉ DE FABRICATION D'UNE PIÈCE TUBULAIRE COMPRENANT UN FILETAGE INTÉRIEUR, ET PIÈCE TUBULAIRE COMPRENANT UN FILETAGE INTÉRIEUR

(30) Priorität: 25.07.2019 DE 102019211094
(43) Veröffentlichungstag der Anmeldung: 01.06.2022
(73) Patentinhaber: Schwarz GmbH, 75382 Althengstett (DE)
(72) Erfinder: HOMNER, Bernhard, 75365 Calw (DE); RODE, Kevin, 70565 Stuttgart (DE); BLANDL, Markus, 70563 Stuttgart (DE); FALK, Gerd, 70376 Stuttgart (DE)
(74) Vertreter: Patentanwälte Ruff, Wilhelm, Beier, Dauster & Partner mbB
(86) Internationale Anmeldenummer: PCT/EP2020/067701
(87) Internationale Veröffentlichungsnummer: WO 2021/013457

(56) Entgegenhaltungen:
- DE-A1- 1 504 798
- DE-B- 1 267 827
- GB-A- 1 293 019
- US-A- 3 572 392
- US-A- 3 673 029

## Beschreibung

### Anwendungsgebiet und Stand der Technik

Die Erfindung betrifft ein Verfahren zum Herstellen eines Rohrteils mit einem Innengewinde sowie ein damit hergestelltes Rohrteil mit einem Innengewinde, wobei das Rohrteil aus mit Matrixmaterial versehenen Fasern hergestellt wird.

Aus der DE 20 2018 100 151 U1 ist eine Schraube bekannt, die aus Carbonfasern hergestellt ist. Dabei ist ein Schraubenkernkörper aus in Längsrichtung verlaufenden Carbonfasern gefertigt, während die Gewindegänge eines Außengewindes mit Carbonfasern aufgewickelt sind, die in Richtung des Längsverlaufs der Gewindegänge verlaufen, also schraubenlinienförmig umlaufend.

Hierbei besteht besteht die Gefahr, dass die Gewindegänge den mechanischen Zusammenhalt zu den Carbonfasern des Schraubenkernkörpers, die schließlich in unterschiedliche Richtungen verlaufen und nur auf den Kernkörper aufgesetzt sind, verlieren, und somit die Schraube beschädigt wird. Ihre Befestigungswirkung ist dann voraussichtlich auch nicht mehr gegeben.

Aus der DE 1 267 827 B ist eine Möglichkeit bekannt, ein Rohrteil mit einem Innengewinde herzustellen gemäß dem Oberbegriff des Anspruchs 1, wozu organische oder anorganische Faserstränge, die zuvor mit Harz getränkt worden sind, aufgewickelt werden. Dabei werden sie stets abwechselnd mit unterschiedlichen Verlegerichtungen aufgewickelt.

### Aufgabe und Lösung

Der Erfindung liegt die Aufgabe zugrunde, ein eingangs genanntes Verfahren zum Herstellen eines Rohrteils mit einem Innengewinde sowie ein solches Rohrteil zu schaffen, mit denen Probleme des Standes der Technik gelöst werden können und es insbesondere möglich ist, ein Rohrteil mit einem Innengewinde, in das beispielsweise eine Schraube oder ein Schraubbolzen eingeschraubt werden kann, vorteilhaft und einfach herzustellen sowie eine dauerhaft feste und belastbare Schraubverbindung zu erhalten.

Gelöst wird diese Aufgabe durch ein Verfahren mit den Merkmalen des Anspruchs 1 sowie durch ein damit hergestelltes Rohrteil mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Rohrteil beschrieben. Sie sollen jedoch unabhängig davon sowohl für das Verfahren als auch für das Rohrteil selbständig und unabhängig voneinander gelten können. Der Wortlaut der Ansprüche wird durch ausdrückliche Bezugnahme zum Inhalt der Beschreibung gemacht.

Es ist vorgesehen, dass die folgenden Schritte durchgeführt werden, um ein Rohrteil mit einem Innengewinde aus Fasern herzustellen. Zuerst werden Fasern als Rovings bereitgestellt, wobei sie bereits mit Matrixmaterial versehen sind. Insbesondere ist dies ein übliches Harz, das dann nach dem Aufbringen oder Verlegen der Fasern auf übliche Art und Weise ausgehärtet wird. Die Fasern können Carbonfasern sein, andere Fasern sind aber ebenso geeignet. Die Fasern werden als Rovings verarbeitet, also als Faserbündel, wobei im Folgenden vorwiegend von Fasern gesprochen wird, selbst wenn sie in Form der Rovings vorliegen. Diese bereits mit Matrixmaterial versehenen Fasern können als Vorrat bereitgestellt werden, vorteilhaft aufgewickelt auf einen Kern odgl., so dass sie auf einer Art Spule aufgewickelt sind. Es wird ein Kern bereitgestellt, der eine spezielle Form mit einem Außengewinde bzw. einer Außengewindeform aufweist. Diesem Außengewinde bzw. dieser Außengewindeform soll das Innengewinde entsprechen, so dass es damit sozusagen geformt wird, und zwar als Abbild dessen. Eine Schraube oder ein Gewindebolzen, der in das fertige Innengewinde eingeschraubt werden soll, muss aber noch nicht exakt die Form dieses Kerns aufweisen, da dies dann eine zu enge Passung ergeben würde.

In einem folgenden Schritt werden die mit Matrixmaterial versehenen Fasern auf den Kern verlegt, um dessen Außenform bzw. dessen Außengewindeform abzuformen. Durch dieses Abformen wird das Innengewinde gebildet, welches dann selbst Gewindegänge, Gewindevorsprünge und eine Gewindevertiefung aufweist. Ein solches Innengewinde kann ein metrisches Gewinde sein, es kann aber auch davon abweichen. Vorteilhaft wird es als eingängiges Gewinde geformt bzw. hergestellt. Beim Verlegen der Fasern werden einige Fasern innerhalb von Gewindevorsprüngen des gebildeten Innengewindes in einer ersten Verlegerichtung verlegt. Diese erste Verlegerichtung verläuft in Richtung des Längsverlaufs der Gewindegänge, also in Schraubenform umlaufend. Anstelle mehrerer Gewindegänge könnte dies auch als einziger Gewindegang bezeichnet werden, der dann eben entlang des gesamten Innengewindes umläuft. Einige der Fasern werden in einer anderen zweiten Verlegerichtung verlegt, wobei diese zweite Verlegerichtung in einem Winkel zwischen 0° und 45° zum Längsverlauf des Rohrteils verläuft, vorteilhaft zwischen 1° und 15°, und zwar im Bereich des Innengewindes. Einige dieser Fasern in der zweiten Verlegerichtung können genau entlang dem Längsverlauf des Rohrteils verlaufen, also auch außerhalb bzw. neben dem Innengewinde. Sie können einen großen Teil der Stabilität des fertigen Rohrteils ausmachen. Die in der ersten Verlegerichtung verlaufenden Fasern sollten mit diesen in der zweiten Verlegerichtung verlaufenden Fasern möglichst gut und stabil verbunden sein, damit das Innengewinde stabil mit dem übrigen Rohrteil verbunden ist und ein insgesamt sehr stabiles Bauteil ergibt. Deswegen werden bevorzugt alle Fasern vor dem Aushärten des Matrixmaterials, mit dem sie versehen sind, verlegt bzw. aufeinandergewickelt. In Ausgestaltung der Erfindung kann noch eine weitere Verlegerichtung vorgesehen sein, insbesondere um das Rohrteil an sich zu bilden, das außerhalb des Innengewindes verläuft. Dies wird nachfolgend noch näher erläutert. Abschließend wird das Matrixmaterial nach dem Verlegen der Fasern bzw. aller Fasern ausgehärtet. Dies erfolgt vorteilhaft in einem Zustand, wenn die Fasern noch auf dem Kern verlegt bzw. aufgewickelt sind. Dazu kann der Kern zuvor auf bekannte Art und Weise mit Trennmittel odgl. versehen werden. Nach dem Aushärten kann der Kern dann entfernt werden, insbesondere herausgedreht werden im Fall eines Kerns aus Metall. Alternativ könnte er auch mechanisch durch Zerstörung herausgearbeitet werden, beispielsweise durch Ausbohren und Herauskratzen oder Herausschmelzen im Fall eines Kerns aus Kunststoff.

Durch die Erfindung ist es somit möglich, ein Innengewinde aus Fasern herzustellen an einem Rohrteil, das stabil und integral mit dem Rohrteil verbunden ist, wobei vorzugsweise das Rohrteil auch aus Fasern gebildet wird. Besonders vorteilhaft können mehrere abwechselnde Schichten bzw. Lagen von Fasern vorgesehen werden. Insbesondere können innerhalb der Gewindegänge bzw. Gewindevorsprünge Fasern nicht nur in der ersten Verlegerichtung verlaufen, sondern auch in der zweiten Verlegerichtung bzw. in einer von der ersten Verlegerichtung abweichenden Verlegerichtung. Dadurch kann eine bessere vorgenannte Anbindung der Fasern des Innengewindes und somit Festigkeit des Innengewindes bzw. des Rohrteils samt Innengewinde erreicht werden.

In vorteilhafter Ausgestaltung der Erfindung werden das Innengewinde und das Rohrteil einteilig und einstückig aus den Fasern hergestellt. So kann ein sehr stabiles und leichtes Rohrteil geschaffen werden. Das Rohrteil kann das Innengewinde in zumindest einem Gewindeabschnitt innen aufweisen. Der Rest des Rohrteils kann dann ein Rohr sein, alternativ auch eine massive Stange, wobei hierfür eigentlich kein Fasermaterial benötigt werden würde. Vorteilhaft kann vorgesehen sein, das gesamte fertige Rohrteil bzw. dessen Matrixmaterial auszuhärten, so dass ein Aushärtungsprozess nur ein einziges Mal notwendig ist.

In vorteilhafter Ausgestaltung der Erfindung wird das Rohrteil nur aus Fasern hergestellt, die mit Matrixmaterial versehen sind. Es werden also keine anderen Teile mit eingeformt. An das fertig aus Fasern hergestellte Rohrteil können anschließend eventuell weitere Teile angebracht oder befestigt werden, beispielsweise Hülsen aus Metall, Vorsprünge odgl.. Dies kann dann aber mit völlig üblichen Verfahren durchgeführt werden.

Bei der Erfindung werden Fasern als eine erste Lage auf den Kern verlegt oder aufgewickelt, die in der ersten Verlegerichtung verlaufen. Sie können ganz tief in die Gewindevertiefung des Kerns verlegt bzw. eingebracht werden, um so beim fertigen Rohrteil die Spitze der Gewindevorsprünge bzw. der Gewindegänge zu bilden. Diese erste Lage von Fasern bzw. die erste Verlegerichtung verläuft also genau entlang der Gewindegänge. Dabei kann vorgesehen sein, dass diese Fasern der ersten Lage, die die Spitze der Gewindevorsprünge bilden, zwischen 1% und 20%, vorzugsweise zwischen 4% und 10%, des Volumens des Gewindegangs bzw. der Gewindevertiefung des Außengewindes des Kerns füllen. Entsprechend kann eine anteilige Füllung des Gewindevorsprungs des Innengewindes sein. Alternativ kann diese erste Lage zwischen 1% und 50%, vorzugsweise zwischen 10% und 25%, der Höhe des Gewindegangs bzw. der Gewindevertiefung des Außengewindes des Kerns füllen. Somit ist klar, dass ein Gewindevorsprung des fertigen Innengewindes nur zum Teil, insbesondere zu einem kleineren Teil, von diesen Fasern mit der ersten Verlegerichtung gebildet ist, die die erste Lage bilden.

Bei der Erfindung ist vorgesehen, dass eine zweite Lage von Fasern mit der zweiten Verlegerichtung auf die vorgenannte erste Lage von Fasern aufgebracht wird. Die zweite Verlegerichtung ist dabei die vorgenannte, vorteilhaft verläuft sie entlang der Längsrichtung des Rohrteils. Auch diese zweite Lage von Fasern wird in die Gewindegänge bzw. in die Gewindevertiefung des Außengewindes des Kerns eingebracht, bildet also einen Teil der Gewindevorsprünge des Innengewindes. Somit werden die Gewindevorsprünge des Innengewindes auch noch zu einem guten Teil durch Fasern der zweiten Verlegerichtung gebildet, wodurch eine verbesserte Gesamtfestigkeit erreicht wird, insbesondere Verbindung des Innengewindes mit dem restlichen Rohrteil. Diese zweite Lage von Fasern mit der zweiten Verlegerichtung kann zwischen 10% und 20% des Volumens der Gewindevertiefung des Außengewindes füllen, möglicherweise auch noch mehr. Alternativ kann sie zwischen 5% und 30% der Höhe der Gewindevertiefung füllen. Somit werden die Gewindevorsprünge des Innengewindes von den Fasern der ersten und der zweiten Lage noch nicht vollständig gebildet bzw. gefüllt.

In einer vorteilhaften Weiterbildung der Erfindung kann dann nämlich noch vorgesehen sein, auf die zweite Lage von Fasern eine dritte Lage von Fasern aufzubringen. Diese werden vorteilhaft wiederum mit der ersten Verlegerichtung verlegt, wobei diese dritte Lage von Fasern zumindest teilweise innerhalb der Gewindevertiefung des Außengewindes verläuft bzw. diese dritte Lage kann noch zumindest teilweise die Gewindevorsprünge des Innengewindes bilden. Bevorzugt verläuft sie noch voll innerhalb der Gewindevorsprünge des Innengewindes. Diese dritte Lage von Fasern wird deswegen mit der ersten Verlegerichtung aufgebracht, damit hier wieder eine variierende Verlegerichtung zur zweiten Verlegerichtung gegeben ist. Des Weiteren können damit, vor allem wenn diese dritte Lage von Fasern mit einer gewissen Kraft aufgebracht bzw. verlegt oder aufgewickelt wird, die bislang in den Gewindevertiefungen des Außengewindes befindlichen Fasern in einen Gewindegrund des Kerns gedrückt werden. Insbesondere die zweite Lage von Fasern kann so in eine Form bzw. in einen Längsverlauf gebracht werden, der vorteilhaft von einem kontinuierlichen Verlauf abweicht und sozusagen immer wieder gestuft ist. Die genannte dritte Lage von Fasern kann die Gewindevertiefungen des Außengewindes füllen, muss dies aber nicht. Sie kann unter Umständen sogar darüber hinausstehen, so dass sie auch einen Teil einer durchgängigen Lage von Fasern bilden könnte, die dann auch über die gesamte Länge des Rohrteils verlaufen kann.

In nochmaliger Weiterbildung der Erfindung kann vorgesehen sein, dass eine vierte Lage von Fasern auf die dritte Lage von Fasern verlegt bzw. aufgebracht wird. Diese vierte Lage von Fasern kann dann wiederum die zweite Verlegerichtung aufweisen. Zusätzlich oder alternativ kann dann auch nochmals eine weitere Lage von Fasern aufgebracht werden, möglicherweise als Abschlusslage. Diese Fasern können dann eine Verlegerichtung aufweisen, die von der ersten Verlegerichtung und von der zweiten Verlegerichtung abweicht. Sie können beispielsweise eine dritte Verlegerichtung mit einem Winkel zwischen den Winkeln der beiden Verlegerichtungen aufweisen, beispielsweise in einem Winkel, der üblicherweise vorteilhaft genutzt wird, um Rohre aus Fasern zu wickeln. Hier können die Verlegerichtungen auch variieren, da es dann eigentlich nur noch darum geht, ein ausreichend stabiles Rohrteil mit gewünschter Stärke zu bilden.

In vorteilhafter Weiterbildung der Erfindung kann vorgesehen sein, dass die Fasern für die erste Lage mit der ersten Verlegerichtung mit einer ersten höheren Zugspannung auf den Kern aufgewickelt bzw. verlegt werden. Diese erste höhere Zugspannung sollte dann größer sein als eine zweite geringere Zugspannung, mit der die zweite Lage von Fasern mit der zweiten Verlegerichtung darauf aufgebracht bzw. verlegt wird. Die genannte zweite geringere Zugspannung ist vorteilhaft mindestens 20% geringer als die erste höhere Zugspannung. Vorteilhaft beträgt sie nur zwischen 20% und 70% der ersten höheren Zugspannung. Durch diese geringere Zugspannung für die zweite Lage ist es möglich, dass dann eine vorgenannte dritte Lage von Fasern, die wiederum in der ersten Verlegerichtung verläuft, mit höherer Zugspannung bzw. mit mehr Kraft verlegt oder aufgewickelt wird auf die zweite Lage, wodurch diese möglichst gut in die Außengewindeform des Kerns hineingedrückt werden kann.

Vorteilhaft kann vorgesehen sein, dass die erste Lage von Fasern durchgängig und in einem Stück verlegt wird. Dies bietet sich an, da sie ja die Spitze des durchgängigen Gewindegangs des Innengewindes bilden soll. Ähnlich kann dies auch für die vorgenannte dritte Lage von Fasern gelten, die ebenfalls in der ersten Verlegerichtung verlaufen sollen und die auch zumindest teilweise, vorteilhaft weitgehend oder vollständig, innerhalb der Gewindevertiefung des Außengewindes aufgebracht wird.

Es kann als erste Möglichkeit vorgesehen sein, dass die zweite Lage von Fasern über eine Länge von maximal drei Gewindeumläufen, insbesondere von nur einem oder zwei Gewindeumläufen, verlegt wird mit ihrer zweiten Verlegerichtung. Dann wird umgehend, also direkt daran anschließend, die genannte dritte Lage von Fasern auf diese zweite Lage von Fasern aufgebracht bzw. verlegt, und zwar wiederum mit der ersten Verlegerichtung. Dabei drückt sie die zweite Lage von Fasern direkt in die Außengewindeform des Kerns hinein. So kann erreicht werden, dass die Fasern für die zweite Lage leicht nachgezogen werden können bzw. nachrutschen können, da sie durch ihr Hineindrücken in die Außengewindeform mehr bzw. erheblich mehr Länge benötigen als nur entlang des Rohrteils verlaufend. Dann kann vorteilhaft die zweite Lage von Fasern wiederum über eine entsprechende Länge von maximal drei Gewindeumläufen oder sogar nur von einem oder zwei Gewindeumläufen mit der zweiten Verlegerichtung aufgebracht werden, woraufhin wiederum ein Umwickeln mit Fasern in der ersten Verlegerichtung erfolgt. Dieses Verfahren kann für die gesamte Länge vorgesehen sein, entlang der das Innengewinde am Rohrteil hergestellt werden soll.

Bei dem vorbeschriebenen Verfahren kann bevorzugt vorgesehen sein, dass das Verlegen sämtlicher Fasern mit der zweiten Verlegerichtung, also entlang des Rohrteils, gleichzeitig erfolgt. Hierzu kann gleichzeitig von mehreren Vorräten oder Spulen, beispielsweise bis zu zehn oder bis zu dreißig, Fasermaterial abgewickelt werden. Ebenso erfolgt das Verlegen der Fasern mit der ersten Verlegerichtung, die die Fasern der zweiten Verlegerichtung in die Gewindevertiefungen eindrücken, ebenfalls kontinuierlich. Dabei kann das Rohrteil entweder gedreht werden, alternativ können Vorräte oder Spulen für diese Fasern der ersten Verlegerichtung sich um das Rohrteil herumdrehen. Dies ist von sogenannten Rundstrickmaschinen und auch aus der Fasertechnik allgemein bekannt. Die Fasern beider Verlegerichtungen werden besonders bevorzugt mit derselben Fortschrittsgeschwindigkeit in Längsrichtung des Rohrteils verlegt. Aufgrund der unterschiedlichen Winkel der beiden Verlegerichtungen zur Längsrichtung des Rohrteils sind die einzelnen Verlegegeschwindigkeiten natürlich unterschiedlich, insbesondere müssen die Fasern mit der ersten Verlegerichtung auf die zweite Lage von Fasern mit der zweiten Verlegerichtung deutlich schneller verlegt bzw. aufgewickelt werden.

Zum Abwickeln der Fasern der zweiten Verlegerichtung von ihren Spulen oder einem entsprechenden Vorrat kann vorgesehen sein, dass eine Kraft zum Abwickeln benötigt wird, um die Fasern eben mit ihrer Verlegerichtung verlegen zu können. Es kann vorgesehen sein, dass die Fasern der zweiten Verlegerichtung erheblich leichter abgewickelt werden können als diejenigen der ersten Verlegerichtung bzw. dass die Kraft, mit der die Fasern der ersten Verlegerichtung verlegt werden, insbesondere als dritte Lage auf die zweite Lage, erheblich größer ist als die Kraft, die benötigt wird, um die Fasern der zweiten Verlegerichtung abzuwickeln. So kann quasi erreicht werden, dass durch das umlaufende Aufwickeln der dritten Lage von Fasern mit der ersten Verlegerichtung auf die zweite Lage, wie dies zuvor erläutert worden ist, die Fasern für diese zweite Lage sozusagen automatisch von ihren Spulen heruntergezogen bzw. abgewickelt werden, zumindest für das Nachziehen bzw. Nachrutschen. Ein Abwickel-Widerstand kann hier möglicherweise einstellbar ausgebildet werden, um sicherzustellen, dass die Fasern der zweiten Lage zwar letztlich auch stets mit einer Komponente in Längsrichtung des Rohrteils abgewickelt werden, aber nicht zu lose verlegt werden. Dieser Abwickel-Widerstand kann abhängig von verschiedenen Faktoren, beispielsweise auch einer Adhäsion des Matrixmaterials, eingestellt werden.

In einem alternativen Verfahren zu diesem allmählichen Aufwickeln zumindest der ersten Lagen der Fasern, um die Gewindegänge des Innengewindes zu bilden, kann als zweite Möglichkeit vorgesehen sein, dass die zweite Lage von Fasern mit der zweiten Verlegerichtung vollständig auf die erste Lage von Fasern verlegt wird bzw. auf den Kern. Dabei können an beiden gegenüberliegenden Enden des Längsbereichs des Rohrteils, in dem diese Fasern verlegt sind bzw. ein Innengewinde vorhanden sein soll, Wendepunkte oder Fixierungen vorgesehen sein. Während beim zuvor beschriebenen Verfahren die Fasern der zweiten Lage erst nach und nach verlegt wurden und direkt darauf die dritte Lage, sollen nun vorteilhaft zuerst die Fasern der zweiten Lage vollständig verlegt werden. Die hierfür notwendigen Wendepunkte oder Fixierungen sind dabei zumindest an einem Ende des Rohrteils bewegbar in Längsrichtung bzw. entlang der Längsrichtung des Rohrteils, vorteilhaft an einem Ende gegenüber dem Gewindebereichs. Auch hier sollen die Fasern der zweiten Lage in die Gewindevertiefungen des Kerns hineinverlegt oder hineingedrückt werden, aber eben erst nachdem die zweite Lage vollständig verlegt worden ist. Das Drücken der Fasern der zweiten Lage in die Gewindevertiefung des Kerns kann derart erfolgen, dass Fasern in der ersten Verlegerichtung, vorteilhaft diejenigen, die eine dritte Lage von Fasern bilden, mit Kraft auf die Fasern der zweiten Lage aufgewickelt werden. So drücken sie wiederum diese Fasern der zweiten Lage in die Gewindevertiefungen des Kerns hinein. Dabei können die Fasern der zweiten Lage jeweils von mindestens einem Ende des Längsbereichs mit dem Gewinde des Rohrteils zu einem Mittelbereich nachbewegt oder nachgezogen werden, wenn in diesem Mittelbereich zuerst die Fasern der dritten Lage mit der ersten Verlegerichtung auf die Fasern der zweiten Lage aufgewickelt werden und diese in die Gewindevertiefungen hineindrücken. Die genannten Wendepunkte oder Fixierungen können dann eben nach innen zu dem Mittelbereich hin wandern, indem nämlich die Fasern der zweiten Lage nachgezogen werden. Dadurch dass die Fasern bereits vor dem Verlegen mit dem Matrixmaterial imprägniert sind, ist ein solches Nachziehen bzw. Nachbewegen gut möglich, ohne dass hierfür allzu viel Kraft benötigt wird. Das Matrixmaterial kann stark reibungsmindernd wirken. Hier wird im Mittelbereich mit den Fasern der dritten Lage begonnen, damit sozusagen die Fasern der zweiten Lage mit ihren Wendepunkten oder Fixierungen möglichst gut zum Mittelbereich bewegt werden können. Das Aufwickeln der Fasern der dritten Lage geht dann in Richtung zu diesen Wendepunkten bzw. Fixierungen hin.

Dabei kann vorgesehen sein, dass gleichzeitig von einem Mittelbereich aus die Fasern der dritten Lage in entgegengesetzte Richtungen verlegt bzw. aufgewickelt werden, so dass sich jeweils von beiden Enden des Längsbereichs für den Gewindeabschnitt die Wendepunkte oder Fixierungen nach innen bewegen beim Nachrutschen der Fasern der zweiten Lage. Ein solches gleichzeitiges Verlegen bzw. Wickeln spart Zeit, um den Gewindeabschnitt herzustellen. Des Weiteren kann davon ausgegangen werden, dass dort, wo zuerst die Fasern der zweiten Lage durch Aufwickeln der Fasern der dritten Lage in die Gewindevertiefung hineingedrückt worden sind, diese weitgehend fixiert sind und nicht mehr nachrutschen oder herausrutschen können. Das Nachziehen der Fasern der zweiten Lage erfolgt somit ausschließlich von den Wendepunkten oder Fixierungen her. Die Wendepunkte oder Fixierungen für die Fasern der zweiten Lage sollten dabei leicht nachvollziehbar derart weit entfernt und außerhalb von den Enden des Gewindeabschnitts liegen, dass sie ausreichend gut nachrutschen können, um mindestens die volle Länge des Gewindeabschnitts mit Fasern der dritten Lage zu bewickeln, wobei hier über den vollen Gewindeabschnitt hinweg die Fasern der zweiten Lage nachrutschen können. Möglicherweise kann die zweite Lage entlang des gesamten Rohrteils verlaufen.

In einer etwas alternativen Ausgestaltung dieser zweiten Möglichkeit der Erfindung wird wiederum die zweite Lage von Fasern mit der zweiten Verlegerichtung auf die erste Lage von Fasern verlegt, wobei dazu Wendepunkte bzw. Fixierungen außerhalb der beiden gegenüberliegenden Enden des Gewindeabschnitts vorgesehen sind. An einem Ende sind diese Wendepunkte bzw. Fixierungen bewegbar in Längsrichtung des Rohrteils, wie zuvor beschrieben. Am anderen Ende sind die Wendepunkte bzw. Fixierungen jedoch unbewegbar, können also nicht verschoben werden. Die Fasern der zweiten Lage werden in die Gewindevertiefungen des Kerns hineinverlegt oder hineingedrückt, was hier vorteilhaft wiederum durch Verlegen bzw. Aufwickeln von Fasern als dritte Lage erfolgt. Sie werden mit der ersten Verlegerichtung mit einer Kraft verlegt bzw. aufgewickelt, die die Fasern der zweiten Lage in die Gewindevertiefungen des Kerns hineindrückt. Dieses Verlegen bzw. Aufwickeln der Fasern der dritten Lage beginnt dort, wo der Wendepunkt unbewegbar ist in Längsrichtung des Rohrteils, also sehr nahe an dem Wendepunkt selbst. Das Nachschieben oder Nachlaufen der Fasern beginnt dann also von den anderen Wendepunkten her, die eben in Längsrichtung des Rohrteils bewegbar sind. So wird mit kontinuierlichem Aufwickeln der Fasern der dritten Lage in der ersten Verlegerichtung weg von dem einen Ende des Gewindeabschnitts mit den festen Wendepunkten bzw. Fixierungen die dritte Lage nach und nach gebildet und dabei die zweite Lage von Fasern nach und nach in die Gewindevertiefungen hinein und somit auf die erste Lage darauf gedrückt. Dies kann so weit erfolgen, bis die dritte Lage von Fasern in gewünschtem Umfang aufgebracht ist, vorteilhaft über den gesamten Gewindeabschnitt hinweg.

Nachfolgend können noch weitere Lagen von Fasern aufgebracht werden als vierte, fünfte Lage etc. Vor Fertigstellen des Rohrteils können als Abschlusslage Fasern aufgebracht werden mit der zweiten Verlegerichtung, also entlang des Rohrteils. Diese Abschlusslage kann zumindest teilweise, vorteilhaft vollständig, außerhalb der Gewindevertiefung des Kerns verlaufen. Darauf können wiederum weitere Lagen von Fasern aufgebracht werden, um das Rohrteil zu bilden, wobei hier die Verlegerichtungen variieren können, wie zuvor erläutert worden ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schräge Seitenansicht eines erfindungsgemäßen Rohrteils mit Gewindeabschnitt samt Innengewinde und Rohrabschnitt,
- Fig. 2: eine schematische Darstellung, wie auf einen Kern mit Außengewinde imprägnierte Fasern in mehreren Lagen mit verschiedenen Verlegerichtungen verlegt werden,
- Fig. 3: eine vereinfachte Schnittdarstellung durch das Außengewinde des Kerns mit in dessen Außengewindevertiefung eingelegten Fasern in verschiedenen Verlegerichtungen,
- Fig. 4: eine Darstellung ähnlich Fig. 3 in Schrägansicht,
- Fig. 5: eine vereinfachte Darstellung, wie nacheinander zwei Lagen von Fasern mit verschiedenen Verlegerichtungen verlegt werden,
- Fig. 6: eine Darstellung, wie von zwei Spulen Fasern für eine erste Lage mit einer ersten Verlegerichtung auf den Kern verlegt werden,
- Fig. 7: eine Darstellung ähnlich Fig. 6, wie von zwei Spulen Fasern mit einer zweiten Verlegerichtung als zweite Lage auf den bewickelten Kern entsprechend Fig. 6 verlegt werden,
- Fig. 8: eine schematische Darstellung wie einzelne Spulenkörper mit Fasern bewickelt werden und dann imprägniert werden, um anschließend auf den Kern verlegt zu werden
- Fig. 9: eine vereinfachte Darstellung ähnlich Fig. 4 und 5, wie mindestens drei Lagen von Fasern mit unterschiedlichen Verlegerichtungen auf einen Kern verlegt bzw. aufgewickelt werden,
- Fig. 10: eine Darstellung als Erweiterung von Fig. 9, um zu zeigen, wie Fasern einer dritten Lage mit erster Verlegerichtung auf mehrere Fasern von Spulen einer zweiten Lage mit zweiter Verlegerichtung verlegt werden,
- Fig. 11: eine Darstellung eines Kerns mit Außengewinden an beiden Enden,
- Fig. 12: eine vereinfachte Darstellung einer Wickelvorrichtung, um Fasern mit der ersten Verlegerichtung von mehreren Spulen auf einen Kern verlegen,
- Fig. 13: eine Darstellung einer Möglichkeit, wie an beiden Endbereichen des Kerns Wendepunkthülsen mit Wendepunktstiften in Längsrichtung bewegbar aufgebracht sind,
- Fig. 14: eine Darstellung des linken Endes des Kerns entsprechend Fig. 13, bei der die ersten drei Lagen von Fasern verlegt sind, wobei die zweite Lage mit der zweiten Verlegerichtung jeweils mit Schlaufen um die Wendepunktstifte geführt ist, wobei die Wendepunkthülsen in Längsrichtung des Kerns bewegbar sind entsprechend Fig. 13, und
- Fig. 15: eine Abwandlung der Darstellung aus Fig. 14 mit relativ zum Kern fixierter Wendepunkthülse samt Wendepunktstiften, um welche Fasern der zweiten Lage mit Schlaufen geführt sind, wobei ein Verlegen der dritten Lage von Fasern weg von der Wendepunkthülse in Richtung erfolgt.

### Detaillierte Beschreibung der Ausführungsbeispiele

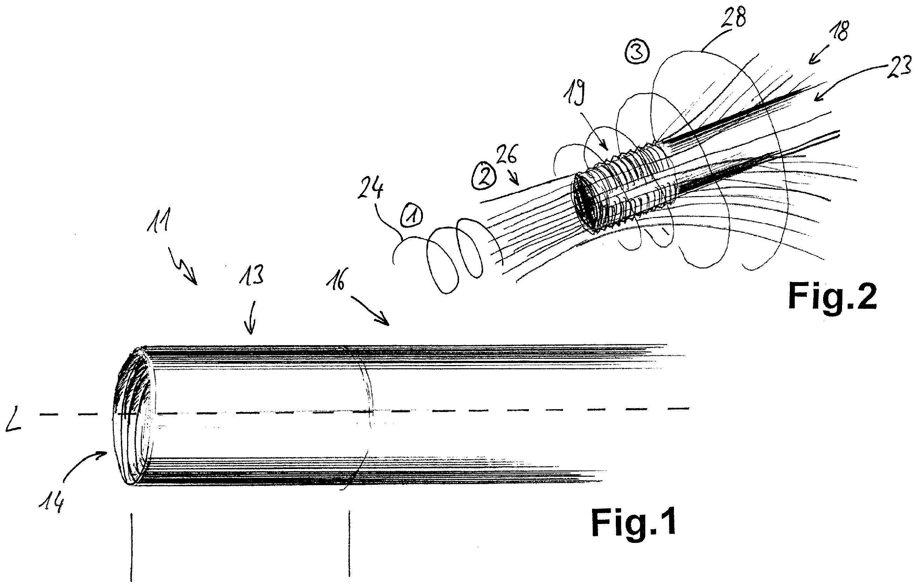

In der Fig. 1 ist ein fertiges erfindungsgemäßes Rohrteil 11 dargestellt, zumindest dessen linkes Ende. Das Rohrteil 11 ist gerade und kann sich nach rechts weitgehend beliebig lang erstrecken. In der Praxis kann es einen Durchmesser zwischen 0,5 cm und 5 cm haben und/oder 10 cm bis 500 cm lang sein. Das Rohrteil 11 besteht im Wesentlichen aus Fasermaterial bzw. ist ein Faserbauteil, vorteilhaft aus Carbonfasern, alternativ aus anderen Fasern oder einer Kombination mehrerer Fasern. Wie üblich sind die Fasern dabei mit einem üblichen Matrixmaterial verklebt bzw. ausgehärtet, beispielsweise einem üblicherweise verwendeten Harz. Das Rohrteil 11 weist eine gestrichelt dargestellte Längsmittelachse L auf, da es vorteilhaft gerade ist. Hier am linken Ende ist ein Gewindeabschnitt 13 am linken Ende des Rohrteils 11 vorgesehen mit einem Innengewinde 14. Dieses Innengewinde ist vorteilhaft ein Rechtsgewinde, kann aber auch ein Linksgewinde sein. Es kann ein normiertes bzw. metrisches Gewinde sein, muss es aber nicht. Vorteilhaft ist es ein eingängiges Gewinde, in welches ein Schraubbolzen odgl. eingeschraubt werden kann. Ein solches Rohrteil 11 kann als Zugstange bzw. als sogenannter Tie-Rod verwendet werden, beispielsweise im Flugzeugbau. Über das Innengewinde 14 können eine Länge und somit eine Verspannung eingestellt werden.

Das Rohrteil 11 kann noch weitere Bestandteile enthalten, beispielsweise Metallbuchsen odgl.. Vorteilhaft ist es aber nicht nur im Bereich des Gewindeabschnitts 13 hohl, sondern durchgehend hohl. Besonders vorteilhaft besteht es nur aus Fasermaterial samt Harz bzw. Matrixmaterial.

In der Fig. 2 ist auf das Herstellungsverfahren bezogen vereinfacht dargestellt, wie auf einen Kern 18, der am linken Ende ein Außengewinde 19 aufweist, verschiedene Fasern als Rovings aufgebracht werden. Gemäß der hier gezeigten Darstellung ist der Kern 18 eine durchgehende Stange, die aus Vollmaterial bestehen kann oder auch ein Rohr sein kann, vorteilhaft aus Metall. Das Außengewinde 19 kann sich über den sonstigen Durchmesser des Kerns 18 nach außen erstrecken, vorteilhaft ist es aber sozusagen in den Kern 18 hineingeschnitten. Das bedeutet dann auch für das Rohrteil 11, dass eine Wandstärke des Rohrteils 11 außerhalb des Gewindeabschnitts 13 auch in diesem Gewindeabschnitt 13 vorliegt plus sozusagen darauf zusätzlich noch die einzelnen Gewindegänge bzw. Gewindevorsprünge. Der Kern 18 kann aus Metall bestehen, alternativ auch aus Kunststoff. Vor dem Verlegen der Fasern sollte er mit einem üblichen Trennmittel behandelt sein, um ihn aus dem Rohrteil 11 nach dessen Fertigstellung entfernen bzw. herausdrehen und herausziehen zu können.

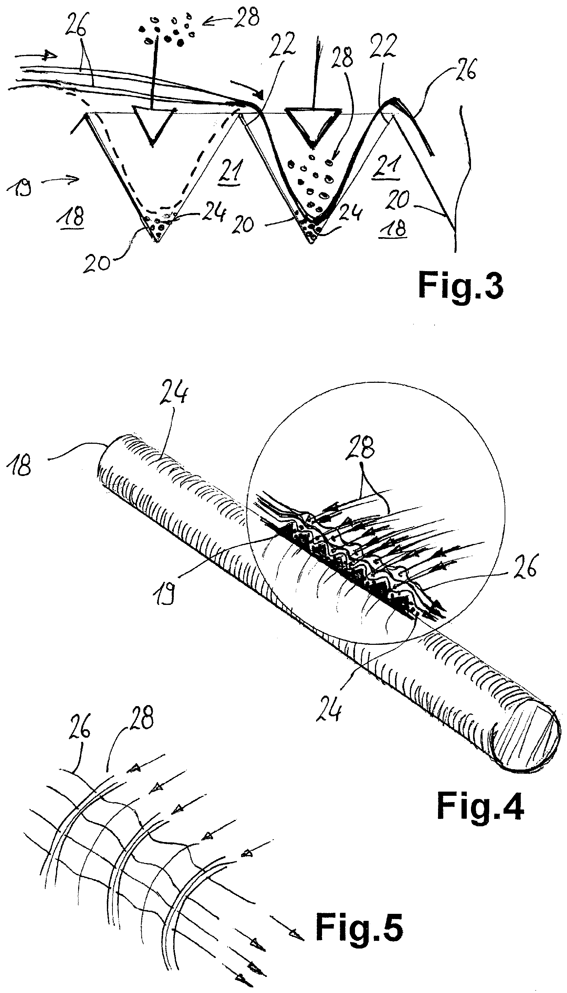

Das Außengewinde 19 des Kerns 18 ist, wie die Fig. 3 in Vergrößerung zeigt, mit Außengewindevertiefungen 20 versehen, die zwischen Außengewindegängen 21 liegen, also weitgehend wie üblich ausgebildet. Die Außengewindegänge 21 weisen Außengewindespitzen 22 auf. Die Darstellung der Fig. 3 ist eine vereinfachte Darstellung eines Querschnitts des Außengewindes des Kerns 18, welcher am Rohrteil für das Innengewinde 14 möglichst genau abgeformt werden sollte. In der Praxis bietet sich eine andere Form an als die hier einfache strenge und spitze Dreieckform mit geraden Flanken. Dem Fachmann sind vielfältige Gewindeformen bekannt, insbesondere sollten die Außengewindevertiefungen 20 ebenso wie die Außengewindespitzen 22 etwas abgeflacht sein. Dazwischenliegende Flanken können unterschiedlich verlaufen, unter Umständen auch abgerundet sein. Dies spielt für die Erfindung aber keine große Rolle, wichtig ist eben, dass das Innengewinde 14 genau der Form des Außengewindes 19 des Kerns 18 entsprechend hergestellt bzw. abgebildet wird. Dementsprechend ist das Außengewinde 19 des Kerns 18 als Werkzeug auszubilden. Der Kern 18 kann auch aus zwei Teilen bestehen, nämlich dem Außengewinde und einem Kernlängsteil 23, die unter Umständen voneinander getrennt werden können für ein einfacheres Entfernen aus dem fertigen Rohrteil 11. Hierfür kann aber an sich auf Erfahrung und Fachwissen aus der Herstellung von solchen Rohrteilen aus Fasern zurückgegriffen werden.

Auf den Kern 18 wird im Bereich des Außengewindes 19, möglicherweise auch ansonsten auf dem Kernlängsteil 23, zuerst eine erste Lage von Fasern 24 aufgebracht bzw. verlegt oder aufgewickelt. Wie die Fig. 3 zeigt, werden diese Fasern 24 mit einer Verlegerichtung entlang des schraubenlinienförmigen Umlaufs der Außengewindegänge 21 in die Außengewindevertiefung 20 hineingelegt. Sie können sie dabei, wie die Fig. 3 zeigt, mit einer Schichtdicke entsprechend einigen Millimetern bzw. 5% bis 15% der Höhe der Außengewindevertiefung 20 füllen. Diese Fasern 24 bilden dann beim späteren Innengewinde 14 die Gewindespitzen. Diese erste Lage ist in Fig. 2 mit (1) bezüglich der Aufbringung dargestellt.

Die Fasern 24, wie auch sämtliche anderen Fasern, werden vorteilhaft in imprägnierten Zustand aufgebracht. Sie werden also erst imprägniert bzw. mit Matrixmaterial versehen, vorteilhaft einem vorgenannten Harz, und dann verlegt. Später werden sie ausgehärtet. Dies ist bekannt aus der DE 10 2013 205 685 A1, auf die hiermit ausdrücklich verwiesen wird.

Anstatt einem üblichen Harzmatrixsystem kann auch ein anderes Klebemittel vorgesehen werden, um das fertige Rohrteil 11 stabil auszubilden. Ein Faservolumengehalt, also das Verhältnis von Fasern und Matrixmaterial, kann in einem Bereich zwischen 40% und 80% liegen, ist also relativ niedrig bzw. es ist relativ viel Matrixmaterial vorhanden. Hier kann auch vorgesehen sein, dass nur für die Fasern 26 der zweiten Lage ein relativ niedriger Faservolumengehalt vorgesehen wird, während für die erste Lage, die dritte Lage und mögliche weitere Lagen, die in der ersten Verlegerichtung verlaufen oder nachher den Rohrabschnitt 16 bilden, also ein noch höherer Faservolumengehalt bzw. eine geringere Menge an Matrixmaterial verwendet wird zur Gewichtsersparnis.

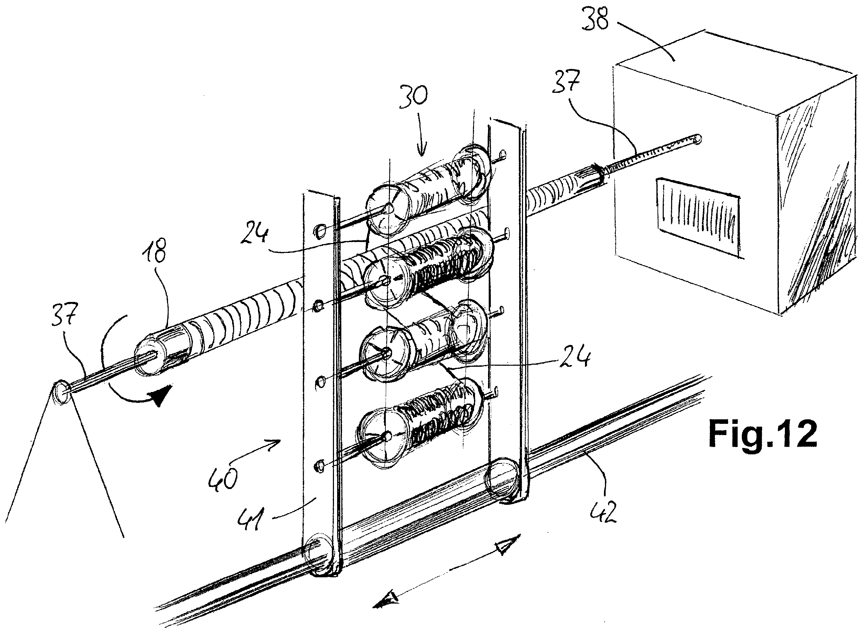

Die erste Verlegerichtung verläuft also schraubenlinienförmig um. Sie weist eine Richtungskomponente mit einem Winkel von für Gewinde üblichen 80° bis 89° zur Längsmittelachse L auf, wobei dieser Winkel offensichtlich vorteilhaft gleich bleibt. Hier können mehrere Rovings für die Fasern 24 verlegt werden, es kann also mehrfach ein Roving bzw. Faserbündel als erste Lage entlang der ersten Verlegerichtung verlegt werden. Vorteilhaft beginnt dies dann immer am selben Punkt. Alternativ kann ein derart dicker Roving verlegt werden, dass mit einem einzigen Verlegevorgang sämtliche Fasern 24 für die erste Lage verlegt werden. Möglicherweise kann dies auch, wie nachfolgend die Fig. 12 zeigt, durch gleichzeitiges Bewickeln von mehreren Spulen erfolgen, wodurch dann auch sozusagen in einem einzigen Verlegevorgang sämtliche Fasern 24 für die erste Lage verlegt werden.

Auf diese Fasern 24 der ersten Lage werden dann Fasern 26 für die zweite Lage aufgebracht bzw. verlegt, wobei in Fig. 2 diese zweite Lage mit (2) gekennzeichnet ist. Diese Fasern 26 für die zweite Lage werden im Wesentlichen entlang der Richtung der Längsmittelachse L verlegt. Entweder kann die Verlegerichtung dieser Richtung entsprechen, alternativ kann sie aber auch in einem geringen Winkel dazu verlaufen, beispielsweise zwischen 0 und maximal 45°, vorteilhaft zwischen 1° und 3°. Der Winkel kann so sein, dass die zweite Verlegerichtung sozusagen in Anlehnung an die erste Verlegerichtung abgeschrägt ist. Damit die Fasern 26 für die zweite Lage aber nicht zu sehr durch ihr folgendes Hineinziehen in die Außengewindevertiefung 20 verrutschen, kann auch ein Verdrehen der zweiten Verlegerichtung in die andere Richtung vorgesehen sein, so dass möglicherweise erreicht werden kann, dass die zweite Verlegerichtung eine Richtungskomponente mit einem Winkel von 90° zur ersten Verlegerichtung aufweist, sie also rechtwinklig zueinander verlaufen.

Aus Fig. 2 ist zu ersehen, dass die Fasern 26 der zweiten Lage rund um den Kern 18 bzw. rund um die Fasern 24 der ersten Lage herum verteilt aufgebracht werden, möglichst gleichmäßig bzw. als homogene Schicht mit möglichst gleicher Schichtdicke. Dies kann, wie nachfolgend noch erklärt wird, in mehreren Schritten gemacht werden, so dass die zweite Lage (2) sozusagen aus mehreren Einzellagen besteht. Es ist offensichtlich, dass durch Auflegen der Fasern 26 für die zweite Lage diese erst einmal weitgehend gerade verlaufen, wie aus Fig. 2 zu ersehen ist und in Fig. 3 ganz links dargestellt ist. Da sie nun aber auch Teil der Gewindevorsprünge des Innengewindes 14 werden sollen, müssen sie in die Gewindevertiefungen 20 des Außengewindes 19 des Kerns 18 eingebracht werden wie zuvor erläutert worden ist. Dies ist aus Fig. 3 zu ersehen, wo über der linken Außengewindevertiefung 20 die Fasern 26 für die zweite Lage noch weitgehend geradlinig verlaufen entsprechend Fig. 2. Von oben werden dann Fasern 28 für die dritte Lage aufgewickelt, welche wiederum in der ersten Verlegerichtung entsprechend den Fasern 24 für die erste Lage verlegt werden. Dies ist in Fig. 2 rechts mit der Lage (3) dargestellt. Es ist aus Fig. 3 zu ersehen, dass diese Fasern 28 von oben gegen die Fasern 26 gedrückt werden sollen mit einer Kraft entsprechend dem dargestellten Pfeil. Dies ist vorteilhaft die ohnehin für das Verlegen bzw. Aufwickeln der Fasern 28 benötigte Kraft. So sollen die Fasern 26 für die zweite Lage den gestrichelt dargestellten Verlauf einnehmen, also auch nach unten in die Außengewindevertiefung 20 hinein. Dies ist in der Fig. 3 für die rechte Außengewindevertiefung 20 dargestellt, hier haben die Fasern 28 der dritten Lage die Fasern 26 der zweiten Lage bereits in die Außengewindevertiefung 20 hineingedrückt bzw. gegen die erste Lage von Fasern 24 gedrückt. Die hier gewählte Darstellung zeigt die Fasern jeweils nicht maximal komprimiert bzw. kompaktiert, wie dies vorteilhaft in der Praxis gemacht werden sollte. Insbesondere werden die Fasern 26 für die zweite Lage vorteilhaft mit erheblich größerer Schichtdicke verlegt, so dass sie auch zwischen 10% und 30% des Volumens der Außengewindevertiefung 20 füllen. Dies kann auch noch mehr sein.

Offensichtlich ist, dass für dieses Hineindrücken der Fasern 26 in die Außengewindevertiefung 20 diese Fasern von links sozusagen nachrutschen oder nachgeführt werden müssen, dargestellt durch die Bewegungspfeile. Insofern ist es für die Erfindung eben wichtig, dass die Fasern bereits mit dem Matrixmaterial versehen bzw. imprägniert sind. Dieses wirkt sozusagen als Schmiermittel bzw. verringert die Reibung. Insofern ist es auch von Vorteil und wichtig, wenn die Fasern 28 der dritten Lage sozusagen allmählich von einem Punkt ausgehend verlegt werden und so Gewindegang für Gewindegang die Fasern 26 der zweiten Lage in die Außengewindevertiefung 20 hineinziehen. Über mehrere Gewindegänge hinweg wäre wahrscheinlich die Reibung für die Fasern 26 zu groß.

Zum Aufbringen der Fasern 28 der dritten Lage kann vorgesehen sein, dass dies mit einer höheren Zugspannung erfolgt als das Verlegen der Fasern 26 für die zweite Lage. Ebenso können auch die Fasern 24 für die erste Lage mit einer höheren Zugspannung verlegt werden, vorteilhaft auf den Kern 18 aufgewickelt werden. Eine Zugspannung sollte auf die Fasern 26 der zweiten Lage permanent wirken, während die Fasern 28 der dritten Lage aufgebracht werden, so dass die Fasern 26 zumindest etwas gespannt sind, um ohne Lose von den Fasern 28 in die Außengewindevertiefung 20 hineingedrückt zu werden.

In den Fig. 4 und 5 ist dies sozusagen in Schrägdarstellung und in vereinfachter Vergrößerung dargestellt. Es ist zu ersehen, wie auf dem Kern 18 bzw. dem Außengewinde 19 dessen Gewindeform entsprechend mehrere Lagen vorgesehen sind, deren Fasern in unterschiedlichen bzw. den vorgenannten zwei Verlegerichtungen verlaufen. Im Hinblick auf die Fig. 3 kann vorgesehen sein, dass dann auf die Fasern 28 der dritten Lage noch einmal Fasern für eine vierte Lage aufgebracht werden, und zwar wiederum in der zweiten Verlegerichtung in etwa entlang der Längsrichtung der Längsmittelachse L. Diese können dann wiederum von Fasern für eine fünfte Lage, welche in der ersten Verlegerichtung verlegt werden, so weit in die Außengewindevertiefungen hineingedrückt werden wie es geht bzw. bis diese voll ist. Ist dies der Fall, können durch Aufwickeln von Fasern mit einer an sich beliebigen Verlegerichtung, beispielsweise überkreuzt mit einem Winkel von etwa 45° zur Längsmittelachse L, der Hauptkörper für das Rohrteil 11 und insbesondere auch der Rohrabschnitt 16 gebildet werden, um dem Rohrteil 11 seine letztliche Wandstärke und seine gewünschte Stabilität zu verleihen. Für dieses Aufwickeln von Fasern nur für die Stabilität des Rohrteils 11 können Fasern mit einer relativ geringen Menge an Matrixmaterial verwendet werden. Hier ist ein Nachrutschen von Fasern nicht mehr nötig und vor allem auch nicht mehr gewünscht.

Gerade aus der Darstellung der Fig. 5, die stark vereinfacht ist, ist noch einmal zu sehen, wie die Fasern 28 der dritten Lage den geraden Längsverlauf der Fasern 26 für die zweite Lage unterbrechen und diese eben in die Außengewindevertiefungen hineindrücken.

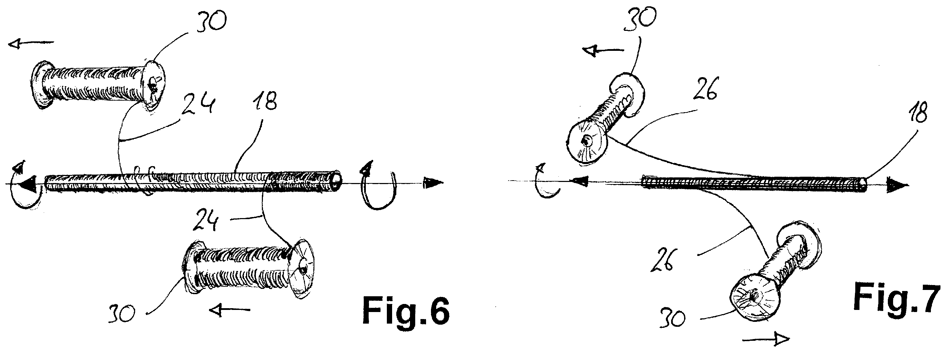

Die Fig. 6 zeigt, wie die Fasern 24 für die erste Lage auf Vorratsspulen 30 entsprechend der vorgenannten DE 10 2013 205 685 A1 aufgewickelt sind und von dort aus auf den Kern 18 aufgewickelt bzw. verlegt werden. Dabei kann vorgesehen sein, dass die Vorratsspulen 30 mit den Fasern 24 darauf weitgehend unbewegbar sind bzw. nicht gedreht werden, sondern sich der Kern 18 dreht mit der hier dargestellten Drehbewegung. Des Weiteren kann er auch entlang seiner Längsrichtung bewegt werden, um die Fasern 24 entsprechend der ersten Verlegerichtung darauf zu verlegen.

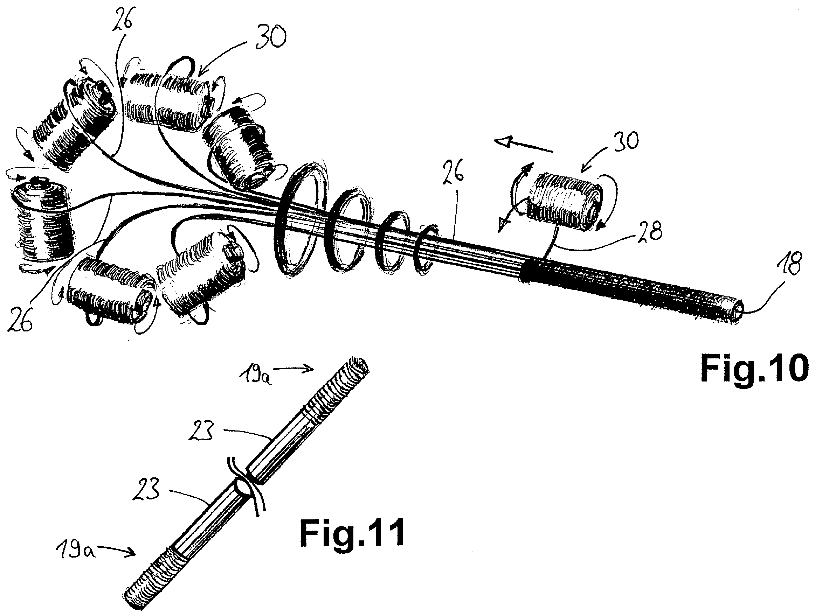

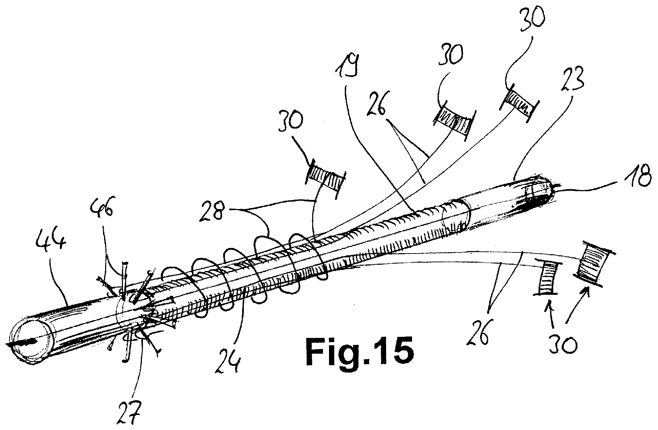

Die Fasern 26 für die zweite Lage sind ebenfalls auf Vorratsspulen 30 aufgebracht, in der Fig. 7 sind zwei solcher Vorratsspulen 30 dargestellt. In der Praxis sind es vorteilhaft mehr, wie nachher in den Fig. 10 und 15 gezeigt ist. Abhängig davon, ob die Fasern 26 für die zweite Lage in der gleichen Richtung oder gegenläufig verlegt werden, wie es hier dargestellt ist, können die Vorratsspulen 30 und/oder der Kern 18 auch entlang der dargestellten Bewegungsrichtung bewegt werden.

Auf die Fasern 26 für die zweite Lage entsprechend Fig. 7 wird dann in einem nächsten Schritt entsprechend Fig. 6 wiederum das Verlegen der Fasern für die dritte Lage mit der ersten Verlegerichtung erfolgen, wie dies vorstehend dargelegt worden ist. Dies erfolgt wie zuvor zu den Fig. 2 bis 5 erläutert.

In Fig. 7 ist dargestellt, wie zur Vorbereitung Fasern von einem großen Faservorrat 32 auf leere Spulenkörper 31 aufgewickelt werden können. Dies ergibt die fertig aufgewickelten Vorratsspulen 30, wobei die Fasern an diesem Faservorrat 32 noch nicht imprägniert sind bzw. kein Matrixmaterial aufweisen. Sie können dann von einem Roboterarm in kleinere Behälter gebracht werden und dort mit Matrixmaterial aus einem Tank 34 in einer Imprägniervorrichtung 35 imprägniert werden. Dies erfolgt vorteilhaft wie in der genannten DE 10 2013 205 685 A1 beschrieben.

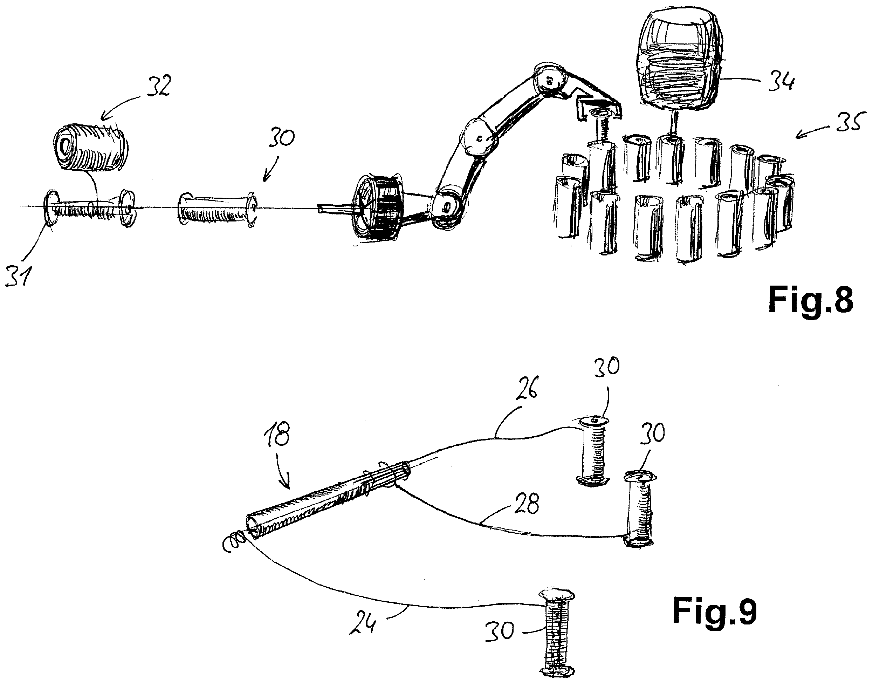

In der Fig. 9 ist ähnlich zu der Fig. 2 noch einmal dargestellt, wie auf den länglichen Kern 18 Fasern 24 für die erste Lage, Fasern 26 für die zweite Lage und Fasern 28 für die dritte Lage jeweils von Vorratsspulen 30 aufgebracht bzw. verlegt werden. Weitere Fasern für weitere Lagen folgen vorteilhaft, dann aber mit den hier beschriebenen Maßgaben wie bereits zuvor beschrieben.

In Fig. 10 ist zusätzlich zur Fig. 3 dargestellt, wie auf einem Kern 18, auf den bereits eine erste Lage von Fasern in der ersten Verlegerichtung aufgewickelt worden ist, von mehreren Vorratsspulen 30 die Fasern 26 für die zweite Lage als eingangs genannte erste Möglichkeit verlegt werden. Dabei verlaufen diese weitgehend nebeneinander und parallel. Anschließend werden von rechts beginnend nach links von einer Vorratsspule 30 Fasern 28 für die dritte Lage aufgewickelt. Hier kann zwar auch der Kern 18 samt den Vorratsspulen 30 gedreht werden, damit die Vorratsspule 30 für die Fasern 28 nicht umlaufen muss. Vorteilhaft wird aber die Vorratsspule 30 mit den Fasern 28 im Kreis entlang der ersten Verlegerichtung um den Kern 18 geführt. Durch das allmähliche Aufwickeln von rechts nach links, also zu den Vorratsspulen 30 mit den Fasern 26 hin, werden diese Fasern 26 sozusagen nach und nach in jeweils erst in eine Außengewindevertiefung und dann in die nächste hineingezogen, so dass die Fasern 26 sehr gut nachrutschen können. So ist die in Fig. 3 dargestellte Richtungsänderung für die Fasern 26 gut erreichbar, so dass diese auch möglichst dicht und entsprechend der Außengewindeform verlegt sind, um so ein möglichst gut und beabsichtigt geformtes Innengewinde 14 am Rohrteil 11 auszubilden.

In Fig. 11 ist dargestellt, wie ein Kern 18 auch an beiden Enden Außengewinde 19a und 19b aufweisen kann. Somit kann hier mit dieser Form ein Rohrteil 11 geschaffen werden, welches eben zwei Innengewinde bzw. zwei Gewindeabschnitte an seinen Enden aufweist. In diesem Fall ist vorteilhaft vorgesehen, dass die Außengewinde 19a und 19b einen größeren Durchmesser aufweisen als der Kern 18, insbesondere ganz unten in der Außengewindevertiefung 20 mindestens den Durchmesser des Kerns 18 aufweisen. Ansonsten kann der Kern 18 nicht aus dem fertigen Rohrteil entfernt werden.

In der Fig. 12 ist dargestellt, wie ein Kern 18 in einer Halterung 37 zum Aufwickeln bzw. Verlegen von Fasern 24 für die erste Lage von mehreren Vorratsspulen 30 gehaltert sein kann. Die Halterung 37 dreht sich entsprechend dem Pfeil, angetrieben von einer Drehvorrichtung 38. Vier Vorratsspulen 30 sind an einem Schlitten 41 drehbar gehalten, der wiederum entlang einer Längsführung 42 bewegbar ist. So können die Fasern 24 sehr schnell in ausreichender Menge auf den Kern 18 verlegt werden. Dies kann auch für Fasern der dritten Lage so gemacht werden, vor allem aber auch für Abschlusslagen von Fasern, die gar nicht mehr in die Außengewindevertiefung hinein verlaufen, sondern eben für die Festigkeit des fertigen Rohrteils sorgen.

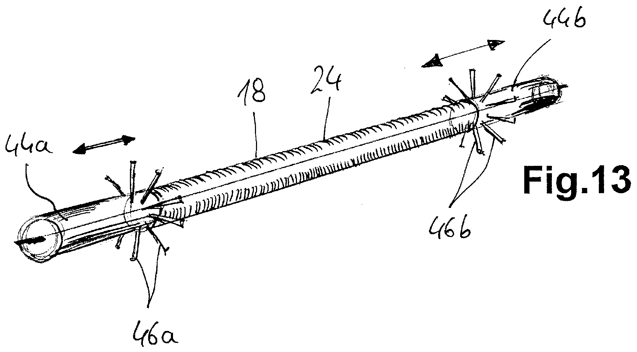

In Fig. 13 ist dargestellt, wie am Kern 18 oder seitlich daneben Wendepunkthülsen 44a und 44b angebracht sind, nämlich eine an jedem Ende. Sie sind vorteilhaft entsprechend der Pfeile entlang der Längsrichtung des Kerns 18 bewegbar, vorteilhaft durch eine hier nicht dargestellte Vorrichtung oder einen entsprechenden Antrieb, möglicherweise auch nur mittels einer Feder odgl.. Die Wendepunkthülsen 44a und 44b müssen auch nicht zwingend über dem Kern 18 laufen, also diesen zumindest teilweise umgeben. Sie sollten aber konzentrisch zu seiner Längsmittelachse L in der Längsbewegung angeordnet und bewegbar sein. Die Wendepunkthülsen 44a und 44b weisen jeweils in radialer Richtung abstehende Wendepunktstifte 46a und 46b auf, die gleich verteilt vorgesehen sind. Es können acht bis dreißig Stück sein. Sie können entlang eines umlaufenden Kreises vorgesehen sein, alternativ auch entlang der Längsrichtung versetzt zueinander, um ein Bewickeln zu erleichtern. Die Wendepunkthülsen 44a und 44b sollen zum Aufbringen der Fasern 26 für die zweite Lage auf die hier dargestellten Fasern 24 der ersten Lage dienen, wobei diese Fasern 24 bereits zumindest teilweise in nicht näher ersichtliche Außengewindevertiefungen eines Außengewindes des Kerns 18 entsprechend Fig. 3 hinein verlegt sind.

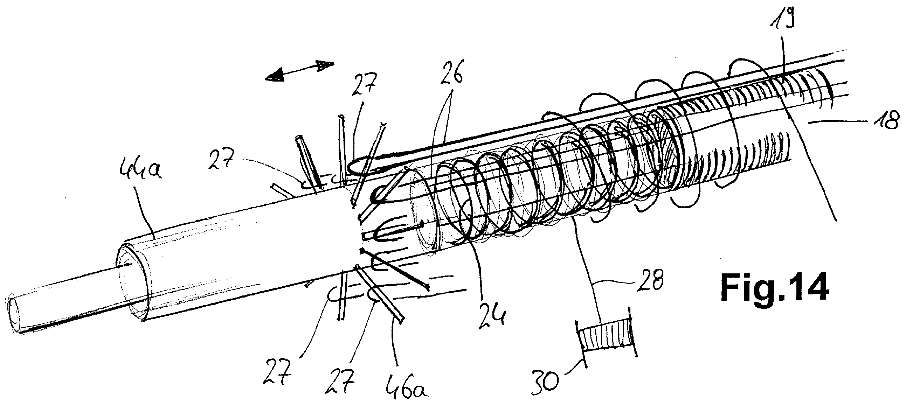

In der Fig. 14 ist gemäß einer vorgenannten zweiten Möglichkeit dargestellt, wie am linken Ende an der Wendepunkthülse 44a um deren Wendepunktstifte 46a die Fasern 26 für die zweite Lage jeweils mit einer Schlaufe 27 umlaufen. Die einzelnen Fasern 26 bzw. deren Rovings können um jeden Wendepunktstift einmal umlaufen, vorteilhaft mehrfach. Sie können dabei um jeweils einzelne Wendepunktstifte 46a herumgeführt sein, alternativ auch um zwei oder drei. Sind ausreichend Fasern 26 für die zweite Lage mit der hier dargestellten zweiten Verlegerichtung entlang der Längsrichtung des Kerns 18 auf die erste Lage von Fasern 24 verlegt oder aufgelegt, wird von rechts beginnend nach links von einer Vorratsspule 30 ein Strang von Fasern 28 für die dritte Lage aufgewickelt. Dieses Aufwickeln erfolgt vorteilhaft in der ersten Verlegerichtung, und zwar viel enger als hier dargestellt, nämlich jeweils entlang einer Außengewindevertiefung, also genau entlang der Fasern 24. Dann wird von rechts nach links zunehmend die zweite Lage von Fasern 26 entsprechend Fig. 3 in die Außengewindevertiefungen hineinbewegt. Die Fasern 26 können von links nach rechts sozusagen nachrutschen, indem die Wendepunkthülse 44a nach rechts wandert. Dies kann sie gesteuert oder aber mit einer gewissen Gegenkraft oder Federkraft tun, damit die Fasern 26 während des Hineindrückens in die Außengewindevertiefung gespannt bleiben. Die Fasern 28 können dabei bis kurz vor die Wendepunktstifte 46 aufgewickelt werden, jedenfalls so lange, bis die dritte Lage fertig ist. Selbstverständlich kann dies auch gleichzeitig von mehreren Spulen erfolgen oder mehrfach hintereinander in Teillagen.

Des Weiteren ist es anhand der Fig. 14 leicht vorstellbar, wie gemäß Fig. 13 auch am anderen rechten hier nicht dargestellten Ende des Kerns 28 an der bewegbaren Wendepunkthülse 44b dasselbe Verfahren durchgeführt wird, also Wickeln vom Mittelbereich des Kerns 18 ausgehend auf die Wendepunkthülse 44b zu, wobei dann auch wiederum die Fasern 26 für die zweite Lage in die Außengewindevertiefungen hineingedrückt werden. Dies wird dann gemacht, wenn das fertige Rohrteil an beiden Enden ein Innengewinde aufweisen soll entsprechend einem Kern der Fig. 11. Dabei können Fasern 28 für die dritte Lage gleichzeitig vom Mittelbereich ausgehend auf beide Wendepunkthülsen 44 zu aufgewickelt werden. Beide Wendepunkthülsen 44 können sich dann durch Nachrutschen der Fasern der zweiten Lage zum Mittelbereich hin bewegen.

Soll am rechten Ende gemäß Fig. 14 kein Innengewinde vorgesehen sein, so kann das Verlegen der Fasern 28 für die dritte Lage auch ganz rechts an der rechte Wendepunkthülse 44b beginnen, die dann auch nicht zwingend bewegbar sein muss. Dort wo der Kern 18 kein Außengewinde aufweist, werden die Fasern 28 für die dritte Lage ja auch nicht sozusagen verkürzt bzw. müssen nicht nachrutschen.

In einer zweiten eingangs beschriebenen Alternative der zweiten Möglichkeit kann gemäß Fig. 15 am linken Ende des Kerns 18 eine Wendepunkthülse 44 vorgesehen sein, die wiederum Wendepunktstifte 46 aufweist. Um diese sind Fasern 26 von Vorratsspulen 30 in der zweiten Verlegerichtung mit Schlaufen umgelegt, und zwar auf Fasern 24 einer ersten Lage. Die Wendepunkthülse 44 ist nicht bewegbar, so dass die Fasern 28 für eine dritte Lage von der Vorratsspule 30 ebenfalls bei der Wendepunkthülse 44 beginnend nach rechts weg von dieser verlegt werden. Dies entspricht hier auch dem Gewindeverlauf eines normalen Rechtsgewindes. Beim Verlegen der Fasern 28 für die dritte Lage werden, wie zuvor erläutert, die Fasern 26 für die zweite Lage nach und nach in die Außengewindevertiefung hineingedrückt. Diesmal können die Fasern 26 aber von rechts nachgeführt werden oder nachrutschen, da sie hier ja noch von den jeweiligen Vorratsspulen 30 abgewickelt werden können. Hier kann ein in Fig. 15 dargestellter langer Außengewindebereich 19 bewickelt werden, genauso aber dann auch der sich rechts anschließende Kernlängsteil 23.

Des Weiteren kann hier im rechten Bereich noch ein weiteres Außengewinde vorgesehen sein, muss aber nicht. In ähnlicher Form kann auch links zur Wendepunkthülse 44 hin ein Außengewinde am Kern 18 vorgesehen sein, dies muss aber ebenfalls nicht sein.

Das Verlegen von weiteren Lagen auf die dritte Lage von Fasern 28 ist hier und auch in den anderen Zeichnungen nicht dargestellt, gemäß der vorstehenden Beschreibung aber leicht vorstellbar. Vorteilhaft werden Fasern mit der ersten Verlegerichtung so lange verlegt oder aufgewickelt, und zwar in die Außengewindevertiefungen hinein, wie diese noch vorhanden sind. Sobald die Außengewindevertiefungen also sozusagen aufgefüllt sind, sei es mit Fasern der ersten Verlegerichtung und/oder mit Fasern der zweiten Verlegerichtung, spielt die Verlegerichtung von weiteren Fasern für die Bildung des Innengewinde 14 keine Rolle und sie können in an sich beliebigen Verlegerichtungen verlegt werden.

Wenn das Rohrteil 11 nach dem Verlegen sämtlicher Fasern ausgehärtet worden ist, vorteilhaft thermisch in einem Ofen oder auf sonstige bekannte Art und Weise, werden die überstehenden Enden mit den freien Faserenden bzw. Schlaufen von den Wendepunktstiften am einfachsten abgesägt. Dann wird der Kern 18 aus dem fertigen Rohrteil 11 entfernt, beispielsweise herausgedreht und/oder herausgezogen. Vom fertigen Rohrteil 11 können dann die Enden wiederum abgesägt werden. Möglicherweise muss das Innengewinde 14 nachbearbeitet oder nachgeschliffen bzw. nachgeschnitten werden. Dabei sollte aber nicht mehr allzu viel Material abgetragen werden, um die Fasern, insbesondere der die Innenspitzen bildenden ersten Lage, nicht zu sehr zu beschädigen.

## Patentansprüche

1. Verfahren zum Herstellen eines Rohrteils (11) mit einem Innengewinde (14) mit den Schritten:
- Bereitstellen von mit Matrixmaterial versehenen Fasern (24, 26, 28) als Rovings,
- Bereitstellen eines Kerns (18), der ein Außengewinde (19a, 19b) bzw. eine Außengewindeform aufweist, die dem Innengewinde (14) entsprechen soll,
- die mit Matrixmaterial versehenen (24, 26, 28) Fasern werden auf den Kern (18) verlegt zur Abformung von dessen Außengewindeform, wodurch das Innengewinde (14) gebildet wird mit Gewindegängen, Gewindevorsprüngen und Gewindevertiefung (20),
- einige der Fasern (24) werden innerhalb von Gewindevorsprüngen des gebildeten Innengewindes (14) in einer ersten Verlegerichtung verlegt, die in Richtung des Längsverlaufs der Gewindegänge verläuft,
- einige der Fasern (26) werden in einer zweiten Verlegerichtung verlegt, die in einem Winkel zwischen 0° und 45° zum Längsverlauf des Rohrteils (11) im Bereich des Innengewindes (14) verläuft,
- nach dem Verlegen der Fasern (24, 26, 28) wird das Matrixmaterial ausgehärtet, vorzugsweise auf dem Kern (18),
**dadurch gekennzeichnet, dass**:
- als eine erste Lage Fasern (24) auf den Kern (18) verlegt werden mit der ersten Verlegerichtung, um beim fertigen Rohrteil (11) die Spitze (22) der Gewindevorsprünge bzw. der Gewindegänge zu bilden,
- eine zweite Lage von Fasern (26) mit der zweiten Verlegerichtung auf die erste Lage von Fasern (24) verlegt werden in die Gewindevertiefungen (20) des Außengewindes (19a, 19b) des Kerns (18).

2. Verfahren nach Anspruch 1, **dadurch gekennzeichnet, dass** das Innengewinde (14) und das Rohrteil (11) aus den Fasern (24, 26, 28) einteilig und einstückig hergestellt werden, wobei das Rohrteil (11) das Innengewinde (14) in zumindest einem Gewindeabschnitt (13) innen aufweist, wobei vorzugsweise abschließend das gesamte Rohrteil (11) bzw. dessen Matrixmaterial ausgehärtet wird.

3. Verfahren nach Anspruch 1 oder 2, **dadurch gekennzeichnet, dass** das Rohrteil (11) nur aus mit Matrixmaterial versehenen Fasern (24, 26, 28) hergestellt wird.

4. Verfahren nach einem der vorhergehenden Ansprüche, **dadurch gekennzeichnet, dass** die Fasern (24) der ersten Lage für die Spitze (22) der Gewindevorsprünge zwischen 1% und 20% des Volumens der Gewindevertiefung (20) des Außengewindes (19a, 19b) des Kerns (18) füllen, oder zwischen 1% und 50% der Höhe der Gewindevertiefung (20) des Außengewindes (19a, 19b) des Kerns (18) füllen.

5. Verfahren nach Anspruch 4, **dadurch gekennzeichnet, dass** die zweite Lage zwischen 10% und 20% des Volumens der Gewindevertiefung (20) des Außengewindes (19a, 19b) füllt oder zwischen 5% und 30% der Höhe der Gewindevertiefung (20) füllt.

6. Verfahren nach einem der vorhergehenden Ansprüche, **dadurch gekennzeichnet, dass** auf die zweite Lage von Fasern (26) mit der zweiten Verlegerichtung eine dritte Lage von Fasern (28) mit der ersten Verlegerichtung verlegt wird, die noch innerhalb der Gewindevertiefung (20) des Außengewindes (19a, 19b) des Kerns (18) verläuft bzw. die noch innerhalb eines Gewindevorsprungs des Innengewindes (14) verläuft.

7. Verfahren nach einem der vorhergehenden Ansprüche, **dadurch gekennzeichnet, dass** eine vierte Lage von Fasern mit der zweiten Verlegerichtung auf die dritte Lage von Fasern (28) verlegt wird.

8. Verfahren nach einem der vorhergehenden Ansprüche, **dadurch gekennzeichnet, dass** die Fasern (24) für die erste Lage mit der ersten Verlegerichtung mit einer ersten höheren Zugspannung auf den Kern (18) durch Aufwickeln verlegt werden, wobei die zweite Lage von Fasern (26) mit der zweiten Verlegerichtung mit einer zweiten geringeren Zugspannung verlegt wird, wobei die zweite geringere Zugspannung mindestens 20% geringer ist als die erste höhere Zugspannung, insbesondere zwischen 20% und 70% der ersten höheren Zugspannung beträgt.

9. Verfahren nach einem der vorhergehenden Ansprüche, **dadurch gekennzeichnet, dass** die erste Lage von Fasern (24) durchgängig und in einem Schritt am Stück verlegt wird, wobei vorzugsweise die dritte Lage von Fasern (28) nach Anspruch 7 auch durchgängig und in einem Schritt und am Stück verlegt wird.

10. Verfahren nach einem der vorhergehenden Ansprüche, **dadurch gekennzeichnet, dass** die zweite Lage von Fasern (26) über eine Länge von maximal drei Gewindeumläufen, insbesondere von nur einem oder zwei Gewindeumläufen, verlegt wird und dann umgehend darauf die dritte Lage von Fasern (28) mit der ersten Verlegerichtung verlegt wird und dabei die zweite Lage von Fasern (26) in die Außengewindeform des Kerns (18) drückt, wobei vorzugsweise das Verlegen sämtlicher Fasern (26) mit der zweiten Verlegerichtung um den Kern (18) herum gleichzeitig erfolgt, und das Verlegen der Fasern (24) mit der ersten Verlegerichtung zum Eindrücken der Fasern (26) der zweiten Verlegerichtung in die Gewindevertiefungen (20) ebenfalls kontinuierlich verläuft, wobei insbesondere das Verlegen der Fasern (24, 26, 28) mit beiden Verlegerichtungen mit derselben Fortschrittsgeschwindigkeit in Längsrichtung des Rohrteils (11) erfolgt.

11. Verfahren nach Anspruch 10, **dadurch gekennzeichnet, dass** die Fasern(26) der zweiten Verlegerichtung jeweils von einer oder mehreren Vorratsspulen (30) odgl., auf denen sie aufgewickelt sind, abgewickelt werden, wobei vorzugsweise die Kraft zum Abwickeln erzeugt wird durch Verlegen der Fasern (24) mit der ersten Verlegerichtung, wobei vorzugsweise eine Zugbremse an den Fasern (26) für die zweite Verlegerichtung vorgesehen ist derart, dass diese nur gegen einen bestimmten Abwickel-Widerstand abgewickelt werden können.

12. Verfahren nach einem der Ansprüche 1 bis 10, **dadurch gekennzeichnet, dass** die zweite Lage von Fasern (26) mit der zweiten Verlegerichtung auf die erste Lage von Fasern (24) verlegt werden mit Wendepunkten (46) oder Fixierungen an oder außerhalb der beiden gegenüberliegenden Enden des Gewindeabschnitts (13) des Rohrteils (11), in dem diese Fasern (24, 26, 28) verlegt sind, wobei die Wendepunkte (46) oder Fixierungen bewegbar sind in Längsrichtung des Rohrteils (11) und die Fasern (26) der zweiten Lage in die Gewindevertiefungen (20) des Kerns (18) hineinverlegt oder hineingedrückt werden, vorzugsweise durch Verlegen bzw. Aufwickeln von Fasern (28) derart in der ersten Verlegerichtung mit einer Kraft, die die Fasern (26) der zweiten Lage in die Gewindevertiefungen (20) des Kerns (18) drücken, wobei die Fasern (26) der zweiten Lage jeweils von den Wendepunkten (46) oder Fixierungen zu einem Mittelbereich nachbewegt bzw. nachgezogen werden mit Bewegung der Wendepunkte (46) oder Fixierungen nach innen, wobei insbesondere das Aufwickeln von Fasern (28) mit der ersten Verlegerichtung auf die beweglichen Fasern (26) der zweiten Verlegerichtung im Mittelbereich der Außengewindeform bzw. des zu bildenden Innengewindes (14) begonnen wird und von dort aus zu mindestens einem Ende des Längsbereichs der Fasern (26) der zweiten Verlegerichtung hin erfolgt, vorzugsweise von diesem Mittelbereich aus gleichzeitig und/oder gleichmäßig zu beiden Enden des Längsbereichs hin.

13. Verfahren nach einem der Ansprüche 1 bis 10, **dadurch gekennzeichnet, dass** die zweite Lage von Fasern (26) mit der zweiten Verlegerichtung auf die erste Lage von Fasern (24) verlegt wird mit Wendepunkten (46) bzw. Fixierungen außerhalb der beiden gegenüberliegenden Enden des Gewindeabschnitts (13) des Rohrteils (11), in dem diese Fasern (24, 26, 28) verlegt sind, wobei an einem Ende die Wendepunkte (46) bewegbar sind in Längsrichtung des Rohrteils (11) und an einem anderen Ende die Wendepunkte (46) unbewegbar sind in Längsrichtung des Rohrteils (11), wobei die Fasern (26) der zweiten Lage in die Gewindevertiefungen (20) des Kerns (18) hineinverlegt oder hineingedrückt werden, vorzugsweise durch Verlegen bzw. Aufwickeln von Fasern (28) als dritte Lage derart in der ersten Verlegerichtung mit einer Kraft, die die Fasern (26) der zweiten Lage in die Gewindevertiefungen (20) des Kerns (18) drücken, wobei das Verlegen bzw. Aufwickeln von Fasern (28) als dritte Lage dort beginnt, wo der Wendepunkt (46) unbewegbar ist in Längsrichtung des Rohrteils (11), wobei die Fasern (26) der zweiten Lage von dem Ende des Längsbereichs mit dem bewegbaren Wendepunkt (46) zu dem anderen Ende nachbewegt bzw. nachgezogen werden mit Bewegung des bewegbaren Wendepunkts zum unbewegbaren Wendepunkt (46) hin.

14. Verfahren nach einem der vorhergehenden Ansprüche, **dadurch gekennzeichnet, dass** als Abschlusslage Fasern aufgebracht werden mit der zweiten Verlegerichtung, wobei die Abschlusslage zumindest teilweise, vorzugsweise vollständig, außerhalb der Gewindevertiefungen (20) des Kerns (18) verläuft, wobei vorzugsweise auf die Abschlusslage weitere Lagen von Fasern aufgebracht werden, um das Rohrteil (11) zu bilden, insbesondere mit variierenden Verlegerichtungen.

15. Rohrteil (11) hergestellt mit einem Verfahren nach einem der vorhergehenden Ansprüche, das ein Innengewinde (14) aufweist und aus Fasern (24, 26, 28) in mehreren Lagen übereinander besteht.

## Claims

1. Method for manufacturing a pipe section (11) with an internal thread (14), comprising the steps:
- providing fibers (24, 26, 28) provided with matrix material as rovings,
- providing a core (18) which has an external thread (19a, 19b) or an external thread shape which is to correspond to the internal thread (14),
- the fibers (24, 26, 28) provided with matrix material are laid on the core (18) to form the external thread shape thereof, thereby forming the internal thread (14) with thread pitches, thread projections, and thread recesses (20),
- some of the fibers (24) are laid within thread projections of the formed internal thread (14) in a first laying direction which runs in the direction of the longitudinal course of the thread pitches,
- some of the fibers (26) are laid in a second laying direction, which runs at an angle between 0° and 45° to the longitudinal direction of the pipe section (11) in the region of the internal thread (14),
- after the fibers (24, 26, 28) have been laid, the matrix material is cured, preferably on the core (18),
**characterized in that**:
- a first layer of fibers (24) is laid on the core (18) with the first laying direction in order to form the tip (22) of the thread projections or thread threads in the finished pipe section (11),
- a second layer of fibers (26) is laid on the first layer of fibers (24) with the second laying direction into the thread recesses (20) of the external thread (19a, 19b) of the core (18).

2. Method according to claim 1, **characterized in that** the internal thread (14) and the pipe section (11) are produced in one piece and in one step from the fibers (24, 26, 28), wherein the pipe section (11) has the internal thread (14) inside in at least one thread section (13), wherein preferably the entire pipe section (11) or its matrix material is finally cured.

3. Method according to claim 1 or 2, **characterized in that** the pipe section (11) is produced only from fibers (24, 26, 28) provided with matrix material.

4. Method according to one of the preceding claims, **characterized in that** the fibers (24) of the first layer for the tip (22) of the thread projections fill between 1% and 20% of the volume of the thread recess (20) of the external thread (19a, 19b) of the core (18) or between 1% and 50% of the height of the thread recess (20) of the external thread (19a, 19b) of the core (18).

5. Method according to claim 4, **characterized in that** the second layer fills between 10% and 20% of the volume of the thread recess (20) of the external thread (19a, 19b) or fills between 5% and 30% of the height of the thread recess (20).

6. Method according to one of the preceding claims, **characterized in that** a third layer of fibers (28) with the first laying direction is laid on the second layer of fibers (26) with the second laying direction, which still runs within the thread recess (20) of the external thread (19a, 19b) of the core (18) or which still extends within a thread projection of the internal thread (14).

7. Method according to one of the preceding claims, **characterized in that** a fourth layer of fibers with the second laying direction is laid on the third layer of fibers (28).

8. Method according to one of the preceding claims, **characterized in that** the fibers (24) for the first layer with the first laying direction are laid on the core (18) with a first higher tensile stress by winding, wherein the second layer of fibers (26) with the second laying direction is laid with a second lower tensile stress, wherein the second lower tensile stress is at least 20% lower than the first higher tensile stress, in particular between 20% and 70% of the first higher tensile stress.

9. Method according to one of the preceding claims, **characterized in that** the first layer of fibers (24) is laid continuously and in one step in one piece, wherein preferably the third layer of fibers (28) according to claim 7 is also laid continuously and in one step and in one piece.

10. Method according to one of the preceding claims, **characterized in that** the second layer of fibers (26) is laid over a length of at most three thread turns, in particular of only one or two thread turns, and then the third layer of fibers (28) is laid immediately thereon in the first laying direction, thereby pressing the second layer of fibers (26) into the external thread shape of the core (18), wherein preferably the laying of all fibers (26) with the second laying direction around the core (18) takes place simultaneously, and the laying of the fibers (24) with the first laying direction to press the fibers (26) of the second laying direction into the thread recesses (20) also proceeds continuously, wherein, in particular, the laying of the fibers (24, 26, 28) with both laying directions takes place at the same speed of progression in the longitudinal direction of the pipe section (11).

11. Method according to claim 10, **characterized in that** the fibers (26) of the second laying direction are each unwound from one or more supply spools (30) or the like on which they are wound, wherein the force for unwinding is preferably generated by laying the fibers (24) in the first laying direction, wherein a tensile brake is preferably provided on the fibers (26) for the second laying direction in such a manner that they can only be unwound against a certain unwinding resistance.

12. Method according to one of claims 1 to 10, **characterized in that** the second layer of fibers (26) with the second laying direction is laid on the first layer of fibers (24) with turning points (46) or fixings at or outside the two opposite ends of the threaded section (13) of the pipe section (11) in which these fibers (24, 26, 28) are laid, wherein the turning points (46) or fixings are movable in the longitudinal direction of the pipe section (11) and the fibers (26) of the second layer are laid into or pressed into the thread recesses (20) of the core (18), preferably by laying or winding fibers (28) in the first laying direction with a force that presses the fibers (26) of the second layer into the thread recesses (20) of the core (18), wherein the fibers (26) of the second layer are each moved away from the turning points (46) or fixings toward a central region or with movement of the turning points (46) or fixings inwards, wherein in particular the winding of fibers (28) with the first laying direction onto the movable fibers (26) of the second laying direction in the central region of the external thread shape or the inner thread (14) to be formed and from there to at least one end of the longitudinal region of the fibers (26) of the second laying direction, preferably simultaneously and/or uniformly to both ends of the longitudinal region from this central region.

13. Method according to one of claims 1 to 10, **characterized in that** the second layer of fibers (26) with the second laying direction is laid on the first layer of fibers (24) with turning points (46) or fixings outside the two opposite ends of the thread section (13) of the pipe section (11) in which these fibers (24, 26, 28) are laid, wherein at one end the turning points (46) are movable in the longitudinal direction of the pipe section (11) and at another end the turning points (46) are immovable in the longitudinal direction of the pipe section (11), wherein the fibers (26) of the second layer are laid or pressed into the thread recesses (20) of the core (18), preferably by laying or winding fibers (28) as a third layer in the first laying direction with a force that presses the fibers (26) of the second layer into the threaded recesses (20) of the core (18), wherein the laying or winding of fibers (28) as a third layer begins there where the turning point (46) is immovable in the longitudinal direction of the pipe section (11), wherein the fibers (26) of the second layer are moved or pulled after the end of the longitudinal region with the movable turning point (46) to the other end pulled along with movement of the movable turning point toward the immovable turning point (46).

14. Method according to one of the preceding claims, **characterized in that** fibers are applied as a final layer with the second laying direction, wherein the final layer extends at least partially, preferably completely, outside the thread recesses (20) of the core (18), wherein further layers of fibers are preferably applied to the final layer to form the pipe section (11), in particular with varying laying directions.

15. Pipe section (11) manufactured using a method according to one of the preceding claims, which has an internal thread (14) and consists of fibers (24, 26, 28) in several layers one above the other.

## Revendications

1. Procédé de fabrication d'une pièce tubulaire (11) avec un filetage intérieur (14), comprenant les étapes suivantes :
- la mise à disposition de fibres (24, 26, 28) pourvues d'un matériau matriciel sous forme de rovings,
- la mise à disposition d'un noyau (18) qui présente un filetage extérieur (19a, 19b) ou une forme de filetage extérieur qui doit correspondre au filetage intérieur (14),
- les fibres (24, 26, 28) pourvues de matériau matriciel sont disposées sur le noyau (18) pour former la forme de filetage extérieur de celui-ci, ce qui forme le filetage intérieur (14) avec des filets, des saillies de filetage et des profondeurs de filetage (20),
- certaines des fibres (24) sont disposées à l'intérieur des saillies de filetage du filetage intérieur (14) formé dans une première direction de disposition qui s'étend dans le sens longitudinal des filets,
- certaines des fibres (26) sont disposées dans une deuxième direction de pose qui s'étend selon un angle compris entre 0° et 45° par rapport à l'extension longitudinale de la pièce tubulaire (11) dans la zone du filetage intérieur (14),
- après la pose des fibres (24, 26, 28), le matériau matriciel est durci, de préférence sur le noyau (18),
**caractérisé en ce que** :
- une première couche de fibres (24) est posée sur le noyau (18) dans la première direction de pose afin de former, sur la pièce tubulaire finie (11), la pointe (22) des saillies filetées ou des filets,
- une deuxième couche de fibres (26) est déposée avec la deuxième direction de pose sur la première couche de fibres (24) dans les profondeurs de filetage (20) du filetage extérieur (19a, 19b) du noyau (18).

2. Procédé selon la revendication 1, **caractérisé en ce que** le filetage intérieur (14) et la pièce tubulaire (11) sont fabriqués d'un seul tenant et d'une seule pièce à partir des fibres (24, 26, 28), la pièce tubulaire (11) présentant le filetage intérieur (14) à l'intérieur dans au moins une partie filetée (13), la pièce tubulaire (11) ou son matériau matriciel étant de préférence durci(e) à la fin.

3. Procédé selon la revendication 1 ou 2, **caractérisé en ce que** la pièce tubulaire (11) est fabriquée uniquement à partir de fibres (24, 26, 28) pourvues d'un matériau matriciel.

4. Procédé selon l'une des revendications précédentes, **caractérisé en ce que** les fibres (24) de la première couche pour la pointe (22) des saillies filetées remplissent entre 1 % et 20 % du volume de la profondeur de filetage (20) du filetage extérieur (19a, 19b) du noyau (18) ou entre 1 % et 50 % de la hauteur de la profondeur de filetage (20) du filetage extérieur (19a, 19b) du noyau (18).

5. Procédé selon la revendication 4, **caractérisé en ce que** la deuxième couche remplit entre 10 % et 20 % du volume de la profondeur de filetage (20) du filetage extérieur (19a, 19b) ou entre 5 % et 30 % de la hauteur de la profondeur de filetage (20).

6. Procédé selon l'une des revendications précédentes, **caractérisé en ce qu'**une troisième couche de fibres (28) avec la première direction de pose est posée sur la deuxième couche de fibres (26) avec la deuxième direction de pose, laquelle couche s'étend encore à l'intérieur de la profondeur de filetage (20) du filetage extérieur (19a, 19b) du noyau (18) ou qui s'étend encore à l'intérieur d'une saillie filetée du filetage intérieur (14).

7. Procédé selon l'une des revendications précédentes, **caractérisé en ce qu'**une quatrième couche de fibres avec la deuxième direction de pose est posée sur la troisième couche de fibres (28).

8. Procédé selon l'une des revendications précédentes, **caractérisé en ce que** les fibres (24) pour la première couche avec la première direction de pose sont posées avec une première tension de traction plus élevée sur le noyau (18) par enroulement, la deuxième couche de fibres (26) étant posée dans la deuxième direction de pose avec une deuxième tension de traction plus faible, la deuxième tension de traction plus faible étant au moins 20 % inférieure à la première tension de traction plus élevée, en particulier comprise entre 20 % et 70 % de la première tension de traction plus élevée.

9. Procédé selon l'une des revendications précédentes, **caractérisé en ce que** la première couche de fibres (24) est posée de manière continue et en une seule étape, la troisième couche de fibres (28) selon la revendication 7 étant également posée de préférence de manière continue et en une seule étape.

10. Procédé selon l'une des revendications précédentes, **caractérisé en ce que** la deuxième couche de fibres (26) est posée sur une longueur maximale de trois tours de filetage, en particulier d'un ou deux tours de filetage seulement, puis la troisième couche de fibres (28) est immédiatement posée dans le premier sens de pose, la deuxième couche de fibres (26) étant pressée dans la forme de filetage extérieur du noyau (18), la pose de toutes les fibres (26) dans le sens de pose autour du noyau (18) s'effectuant de préférence simultanément, et la pose des fibres (24) dans la première direction de pose pour enfoncer les fibres (26) de la deuxième direction de pose dans les profondeurs de filetage (20) s'effectuant également de manière continue, la pose des fibres (24, 26, 28) dans les deux directions de pose s'effectuant notamment à la même vitesse d'avancement dans le sens longitudinal de la pièce tubulaire (11).

11. Procédé selon la revendication 10, **caractérisé en ce que** les fibres (26) de la deuxième direction de pose sont déroulées respectivement à partir d'une ou plusieurs bobines d'alimentation (30) ou similaires sur lesquelles elles sont enroulées, la force de déroulement étant de préférence générée par la pose des fibres (24) dans la première direction de pose, un frein de traction étant de préférence prévu sur les fibres (26) pour la deuxième direction de pose de telle sorte que celles-ci ne puissent être déroulées que contre une résistance de déroulement déterminée.

12. Procédé selon l'une des revendications 1 à 10, **caractérisé en ce que** la deuxième couche de fibres (26) avec la deuxième direction de pose est posée sur la première couche de fibres (24) avec des points de retournement (46) ou des fixations sur ou à l'extérieur des deux extrémités opposées de la partie filetée (13) de la pièce tubulaire (11) dans laquelle ces fibres (24, 26, 28) sont posées, les points d'inflexion (46) ou les fixations étant mobiles dans la direction longitudinale de la pièce tubulaire (11) et les fibres (26) de la deuxième couche étant posées ou enfoncées dans les profondeurs de filetage (20) du noyau (18), de préférence par pose ou enroulant les fibres (28) dans la première direction de pose avec une force qui presse les fibres (26) de la deuxième couche dans les profondeurs de filetage (20) du noyau (18), les fibres (26) de la deuxième couche étant déplacées ou tirées à partir des points de retournement (46) ou des fixations vers une zone centrale tirées vers l'arrière avec déplacement des points de retournement (46) ou des fixations vers l'intérieur, l'enroulement des fibres (28) dans la première direction de pose sur les fibres mobiles (26) de la deuxième direction de pose dans la zone centrale de la forme de filetage extérieur ou du filetage intérieur (14) à former, et à partir de là vers au moins une extrémité de la zone longitudinale des fibres (26) de la deuxième direction de pose, de préférence à partir de cette zone centrale simultanément et/ou uniformément vers les deux extrémités de la zone longitudinale.

13. Procédé selon l'une des revendications 1 à 10, **caractérisé en ce que** la deuxième couche de fibres (26) avec la deuxième direction de pose est posée sur la première couche de fibres (24) avec des points d'inflexion (46) ou des fixations à l'extérieur des deux extrémités opposées de la partie filetée (13) de la pièce tubulaire (11) dans laquelle ces fibres (24, 26, 28) sont posées, les points d'inflexion (46) étant mobiles dans le sens longitudinal de la pièce tubulaire (11) à une extrémité et immobiles dans le sens longitudinal de la pièce tubulaire (11) à une autre extrémité, les fibres (26) de la deuxième couche étant posées ou enfoncées dans les profondeurs de filetage (20) du noyau (18), de préférence par pose ou enroulant des fibres (28) en tant que troisième couche dans la première direction de pose avec une force qui presse les fibres (26) de la deuxième couche dans les profondeura de filetage (20) du noyau (18), la pose ou l'enroulement enroulement des fibres (28) en tant que troisième couche commence là où le point d'inflexion (46) est immobile dans le sens longitudinal de la pièce tubulaire (11), les fibres (26) de la deuxième couche étant déplacées ou tirées depuis l'extrémité de la zone longitudinale avec le point d'inflexion mobile (46) vers l'autre extrémité sont entraînées avec le déplacement du point d'inflexion mobile vers le point d'inflexion fixe (46).

14. Procédé selon l'une des revendications précédentes, **caractérisé en ce que** des fibres sont appliquées comme couche finale avec la deuxième direction de pose, la couche finale s'étendant au moins partiellement, de préférence entièrement, à l'extérieur des profondeurs de filetage (20) du noyau (18), d'autres couches de fibres étant de préférence appliquées sur la couche finale afin de former la pièce tubulaire (11), en particulier avec des directions de pose variables.

15. Pièce tubulaire (11) fabriquée selon un procédé selon l'une des revendications précédentes, qui présente un filetage intérieur (14) et est constituée de fibres (24, 26, 28) en plusieurs couches superposées.
